# EUROPEAN PATENT APPLICATION

(11) **EP 4 814 032 A1**
(43) Date of publication of application: **30.09.2026**
(21) Application number: 24907948.4
(22) Date of filing: 10.12.2024
(51) Int. Cl.: C08G 61/02, C08J 5/22, B01J 41/13, C25B 13/08, C25B 1/04, H01M 8/1023

(54) **ION CONDUCTIVE COMPOUND AND METHOD FOR PREPARING SAME**

(30) Priority: 22.12.2023 KR 20230189725; 06.11.2024 KR 20240156204
(71) Applicant: Hanwha Solutions Corporation, Jung-gu Seoul 04541 (KR)
(72) Inventor: HAN, Junyoung, Daejeon 34128 (KR); LEE, Hyun Seung, Daejeon 34128 (KR); WOO, Ji Hoon, Daejeon 34128 (KR); KWON, Kyungho, Daejeon 34128 (KR)
(74) Representative: Berggren Oy
(86) International application number: PCT/KR2024/020175
(87) International publication number: WO 2025/135664

(57) **Abstract**

Provided are an ion conductive compound which exhibits excellent ion conductivity and is useful as an ion exchange material such as an anion exchange membrane, an ion conductive membrane, an electrolyte membrane, a separator, or a water treatment membrane, and a method for preparing the same.

## Description

### [TECHNICAL FIELD]

### Cross-reference to Related Applications

The present application is based on, and claims priority from, Korean Patent Application Nos. 10-2023-0189725 and 10-2024-0156204, filed on December 22, 2023 and November 6, 2024, respectively, the disclosures of which are hereby incorporated by reference herein in their entirety.

The present invention relates to an ion conductive compound and a method for preparing the same.

### [BACKGROUND ART]

Ion conductive polymers are widely used as ion exchange materials such as anion exchange membranes, ion conductive membranes, electrolyte membranes, separators, or water treatment membranes in various electrochemical devices such as fuel cells and water electrolysis.

Recently, as the problem of climate change due to global warming becomes serious, interest is concentrated on research on alternative energy to reduce greenhouse gas emissions. Among them, fuel cells are pollution-free systems using chemical reaction energy of hydrogen and oxygen, and have a wide range of application fields such as portable power sources for mobile communication equipment, transport power sources for automobiles, and household and military power generation systems because of high power density and energy conversion efficiency and the possibility of miniaturization.

Water electrolysis technology is a technology for producing hydrogen by electrolyzing water, and is classified into alkaline water electrolysis (AWE), proton exchange membrane water electrolysis (PEMWE), and anion exchange membrane water electrolysis (AEMWE) according to characteristics of an electrolyte and a type of separator.

An anion exchange membrane water electrolysis system includes an anion exchange membrane (AEM) for preventing crossover between ion redox active species of an anode and a cathode, and an ion conductive polymer is mainly used in forming the anion exchange membrane.

In general, an ion conductive polymer used for forming an anion exchange membrane is composed of a polymer backbone and an ion-conducting group. As ion-conducting functional groups, quaternary ammoniums such as benzyl ammonium, alkyl ammonium, imidazolium, piperidinium, and spiro ammonium are used, and as polymer backbones constituting AEMs, poly(aryl ether sulfone) (PES), poly(aryl ether ketone) (PAEK), poly(phenylene oxide) (PPO), polyspirobisindane, polyphenylene (PP), styrene-ethylene-butylene-styrene copolymer (SEBS), and the like are used. In particular, an aryl ether-free polyphenylene polymer backbone has excellent chemical stability and mechanical properties against hydroxide ions (OH⁻), and thus many studies have been recently conducted thereon.

In general, since water acts as a conduction medium for OH⁻ in the ion conduction mechanism of AEM, appropriate water uptake (WU) must be accompanied for high ion conductivity of AEM. In addition, if the AEM has a high hydration number, the ion conductivity of OH⁻ may be decreased.

Polyphenylene-based AEMs have a relatively low water uptake (WU), that is, a low hydration number, compared to a high ion exchange capacity (IEC). Accordingly, polyphenylene-based AEMs have attempted to secure a required level of WU and ion conductivity by introducing more ion-conducting groups. Ion-conducting groups having a positive charge are relatively less stable against OH⁻ than polymer backbones. And, the introduction of excessive ion-conducting groups causes high WU, which leads to a reduction in ion conductivity, meaning it may have a somewhat negative effect on the long-term stability of the AEM.

### [DISCLOSURE OF INVENTION]

### [TECHNICAL PROBLEM]

An object of the present invention is to provide an ion conductive compound which exhibits excellent ion conductivity and is useful as an ion exchange material such as an anion exchange membrane, an ion conductive membrane, an electrolyte membrane, a separator, or a water treatment membrane, and a method for preparing the same.

Another object of the present invention is to provide an ion exchange material prepared from the ion conductive polymer.

### [TECHNICAL SOLUTION]

Accordingly, according to the present invention, an ion conductive compound comprising a structure represented by Chemical Formula 1 below is provided: 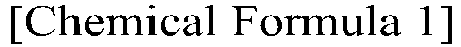 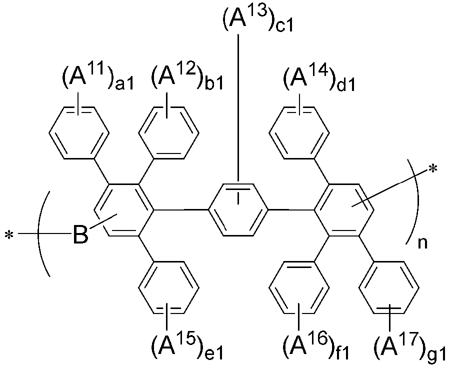 in Chemical Formula 1,
A¹¹ to A¹⁷are each independently represented by Chemical Formula 2 below,
B is an arylene group having 6 to 18 carbon atoms,
a1 to g1 are each independently an integer of 0 or 1, provided that at least one of a1 to g1 is an integer of 1, and
n is an integer of 1 or more,

   [Chemical Formula 2] *-L-Z · Y
in Chemical Formula 2,
L is a branched alkylene group having 3 to 30 carbon atoms,
Z is a quaternary ammonium-based cationic functional group, and
Y is an anion.

Also, according to the present invention, provided is a method for preparing an ion conductive compound, comprising: a first step of preparing a compound comprising a structure represented by Chemical Formula 7 below by reacting a compound comprising a structure represented by Chemical Formula 5 below with one or more among compounds represented by Chemical Formula 6 below in the presence of a strong acid; and a second step of reacting the compound comprising a structure represented by Chemical Formula 7 with a raw material forming a quaternary ammonium-based cationic functional group: 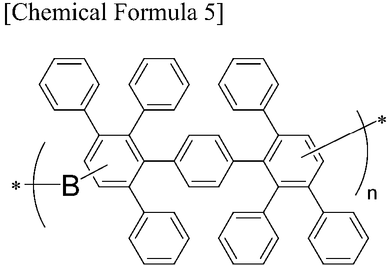 in Chemical Formula 5,
B is an arylene group having 6 to 18 carbon atoms, and
n is an integer of 1 or more,

   [Chemical Formula 6] HO-L-X
in Chemical Formula 6,
L is a branched alkylene group having 3 to 30 carbon atoms, and
X is a halogen group, 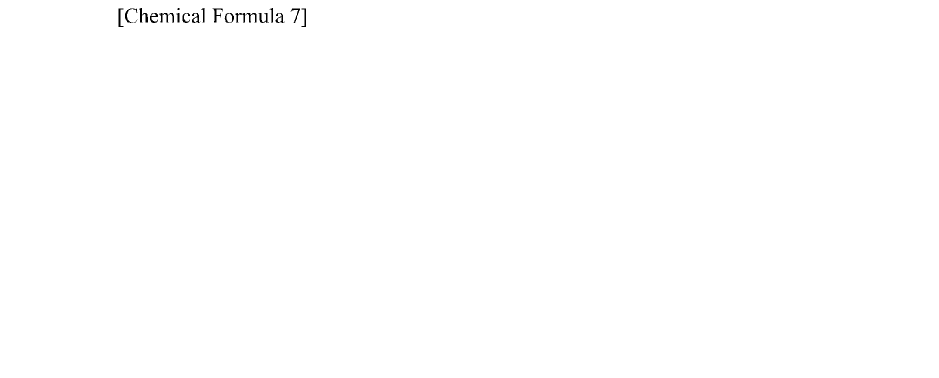 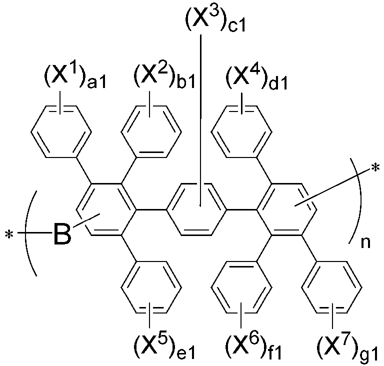
in Chemical Formula 7,
B is as defined in Chemical Formula 5,
X¹ to X⁷ are each independently represented by Chemical Formula 8 below,
a1 to g1 are each independently an integer of 0 or 1, provided that at least one of a1 to g1 is an integer of 1, and
n is an integer of 1 or more,

   [Chemical Formula 8] *-L-X
in Formula 8,
L is a branched alkylene group having 3 to 30 carbon atoms, and
X is a halogen group.

Also, according to the present invention, an ion exchange material comprising the ion conductive compound is provided.

Also, according to the present invention, an ion conductive membrane comprising the ion conductive compound is provided.

### [EFFECTS OF THE INVENTION]

The ion conductive compound according to the present invention comprises an aromatic segment formed through Diels-Alder polymerization and has a structure in which a cationic functional group is bonded to a pendant phenyl group by a branched linker, thereby exhibiting excellent ion conductivity and as a result, is useful for preparing an ion conductive material, particularly an anion exchange membrane, and a MEA (Membrane Electrode Assembly) as an ionomer material.

Also, according to the method for preparing an ion conductive compound according to the present invention, a high-purity ion conductive compound can be prepared with excellent efficiency.

### [EMBODIMENTS FOR CARRYING OUT THE INVENTION]

The terminology used herein is for the purpose of describing exemplary embodiments only and is not intended to be limiting of the present invention. The singular forms are intended to include the plural forms as well, unless the context clearly indicates otherwise. In this specification, the terminology "comprise," "include," or "have" is used to describe stated features, numbers, steps, components, or combination thereof, and do not preclude the addition of one or more other features, numbers, steps, components, or combinations thereof.

Since the present invention can be modified in various ways and have various forms, specific embodiments will be illustrated and described in detail below. However, this is not intended to limit the present invention to a specific disclosed form, and it should be understood to include all changes, equivalents, or substitutes included in the spirit and technical scope of the present invention.

In the present invention, "pendant" means a functional group bonded to a side chain rather than an element constituting a main chain backbone, particularly an aromatic ring substituent such as a phenyl group.

Also, in the present invention, the term "substituted or unsubstituted" means being unsubstituted or substituted with one or more substituents selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamino group; an aralkylamino group; a heteroarylamino group; an arylamino group; an arylphosphine group; or a heterocyclic group comprising one or more of N, O and S atoms, or being unsubstituted or substituted with a substituent to which two or more substituents among the exemplified substituents are connected. For example, "a substituent to which two or more substituents are connected" may be a biphenyl group. That is, a biphenyl group may be an aryl group, or may be interpreted as a substituent to which two phenyl groups are connected.

Also, in the present specification, * in a chemical formula means a bonding position.

Hereinafter, the present invention will be described in detail.

The ion conductive compound according to the present invention is a compound comprising a structure represented by Chemical Formula 1 below: 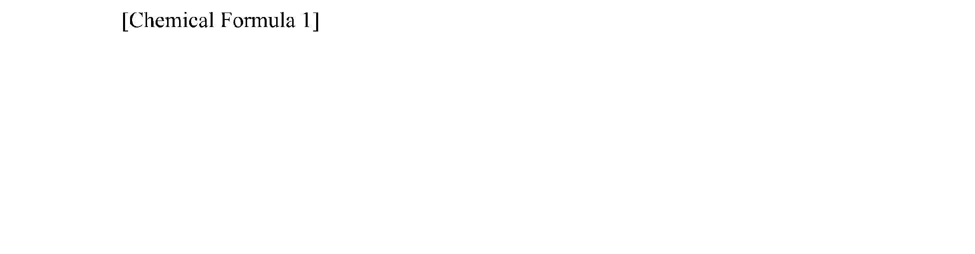 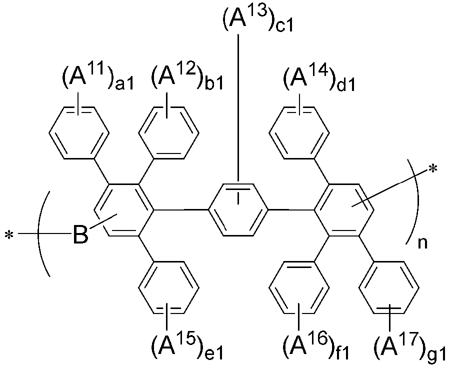 in Chemical Formula 1,
A¹¹ to A¹⁷are each independently represented by Chemical Formula 2 below,
B is an arylene group having 6 to 18 carbon atoms,
a1 to g1 are each independently an integer of 0 or 1, provided that at least one of a1 to g1 is an integer of 1, and
n is an integer of 1 or more,

   [Chemical Formula 2] *-L-Z · Y
in Chemical Formula 2,
L is a branched alkylene group having 3 to 30 carbon atoms,
Z is a quaternary ammonium-based cationic functional group (Quaternary ammonium cationic functional group), and
Y is an anion.

Specifically, the ion conductive compound according to the present invention comprises an aromatic segment formed through Diels-Alder polymerization as in Chemical Formula 1, and has a structure in which a quaternary ammonium-based cationic functional group is bonded to a pendant phenyl group by a branched linker with respect to the main chain structure. When the backbone of the compound is composed only of phenyl or benzene units, it has high chemical stability and can be operated at a relatively high temperature due to robust characteristics.

In addition, in the case of a conventional Diels-Alder polyphenylene-based ion conductive polymer, a cationic functional group was mainly bonded to a pendant phenyl by a long linear alkylene chain linker, but the long alkylene chain bonded to the pendant phenyl increased the volume around the backbone and interfered with polymer chain packing, resulting in an increase in free volume between chains. Such an increase in free volume is effective for ion transport, but has a problem of relatively lowering ion selectivity and increasing WU.

In this regard, in the ion conductive compound according to the present invention, since the quaternary ammonium-based cationic functional group is bonded to the pendant phenyl group by a branched linker, the chemical stability of the pendant phenyl group can be improved. Also, even with a high molecular weight, it exhibits excellent solubility in main solvents such as NMP and DMSO, and as a result, processability can be improved when applied to an anion exchange material. In addition, since it may have a relatively high degree of functionalization (DF) compared to the conventional one, when an anion exchange material or an anion exchange membrane is prepared using the same, durability can be improved along with improvement in IEC and conductivity.

The ion conductive compound according to the present invention may be a monomolecular compound comprising one structure (or repeating unit structure) represented by Chemical Formula 1, that is, n=1. In addition, the ion conductive compound also includes ionomers and polymers comprising a plurality of structures represented by Chemical Formula 1, that is, n=2 or more.

In addition, when the ion conductive compound comprises a plurality of structures represented by Chemical Formula 1, it may be a homopolymer consisting of only one type (or a single type) of structure among the structures represented by Chemical Formula 1, or it may be a copolymer comprising two or more different structures among the structures represented by Chemical Formula 1.

Generally, a wide range of functions can be exhibited depending on the type and number of cationic functional groups bonded to the pendant phenyl group.

The ion conductive compound in the present invention comprises a quaternary ammonium-based cationic functional group that is excellent in terms of ion conductivity and durability among various cationic functional groups.

The number of bonds of the quaternary ammonium-based cationic functional group can be adjusted by controlling the stoichiometric ratio of precursor materials used in preparation.

Specifically, the ion conductive compound may be one among compounds comprising a structure represented by Chemical Formulas 1a to 11 below. Among them, it may be a compound comprising a structure represented by Chemical Formula 1a: 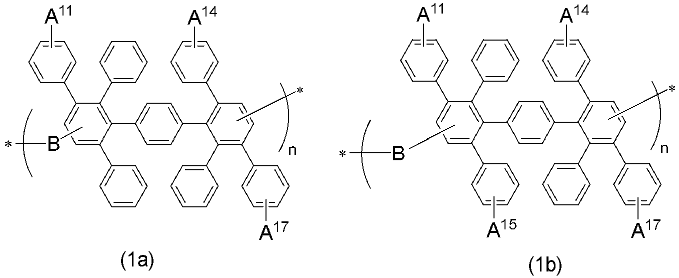 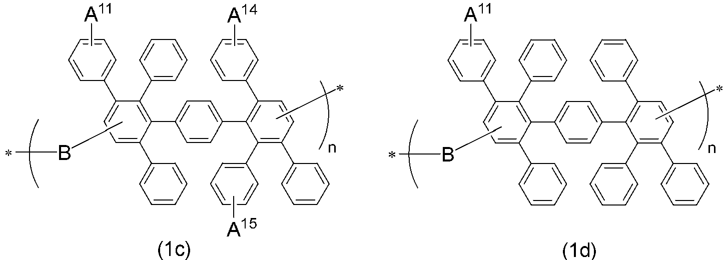 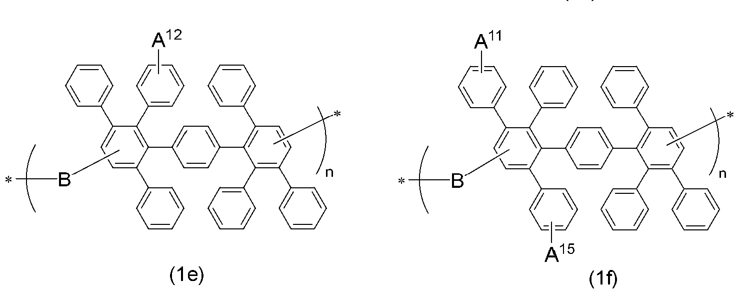 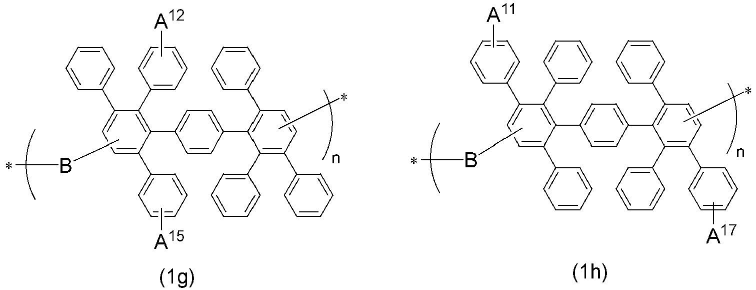 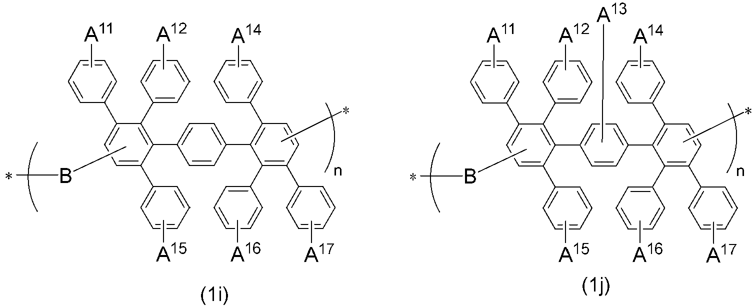 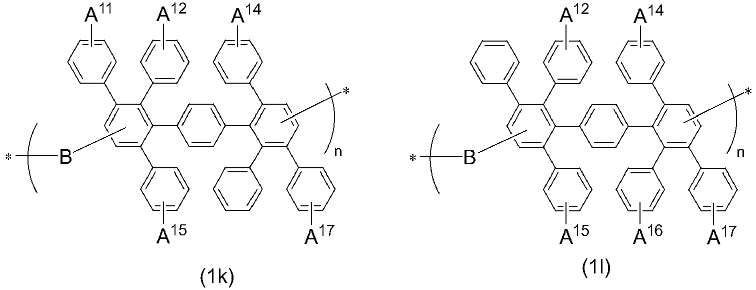 in Chemical Formulas 1a to 11, A¹¹ to A¹⁷, B and n are as defined above.

Also, in Chemical Formula 1, B may be an arylene group having 6 to 12 carbon atoms, and more specifically, p-phenylene, m-phenylene, or biphenylene.

Also, a1 to g1 are each independently an integer of 0 or 1, provided that at least one of a1 to g1 may be an integer of 1.

Also, in Chemical Formula 2, L is a branched linker to which a quaternary ammonium-based cationic functional group (Z) is bonded, and more specifically, may be a branched alkylene group having 3 to 30 carbon atoms represented by Chemical Formula 3 below: 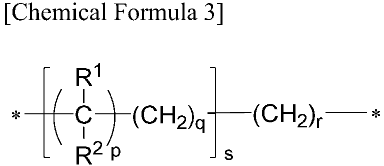 in Chemical Formula 3,
at least one of R¹ and R² is an alkyl group having 1 to 6 carbon atoms, and the remainder is hydrogen,
p is an integer of 1 to 3,
q and r are each independently an integer of 0 to 10, provided that q and r are not an integer of 0 at the same time, and
s is an integer of 1 to 3.

Meanwhile, in Chemical Formula 3, p, q, r, and s are appropriately determined within the above range so that the total number of carbon atoms contained in L is 3 to 30.

More specifically, in Chemical Formula 3, at least one of R¹ and R² is an alkyl group having 1 or more and 6 or less, or 4 or less, or 3 or less, or 2 or less carbon atoms, and the remainder may be hydrogen.

Even more specifically, in Chemical Formula 3, at least one of R¹ and R² is a methyl group, an ethyl group, an n-propyl group, or an isopropyl group, and the remainder may be hydrogen. For example, both R¹ and R² may be methyl groups.

Also, in Chemical Formula 3, p may be an integer of 1 or 2.

Also, q and r may each independently be an integer of 0 to 6, or 0 to 3, provided that q and r are not an integer of 0 at the same time.

Also, s may be an integer of 1 or 2.

For example, in Chemical Formula 3, p is an integer of 1 or 2, r is an integer of 0, q is an integer of 3 to 6, and s may be an integer of 1 or 2.

More specifically, in Chemical Formula 2, L may be 1,1-dimethylhexylene, 1,1-diethylhexylene, 1,1-dimethylheptylene, or 1,1-dimethylpentylene.

Also, in Chemical Formula 2, Z is a quaternary ammonium-based cationic functional group.

Specifically, Z may be represented by Chemical Formula 4-1 or Chemical Formula 4-2 below: 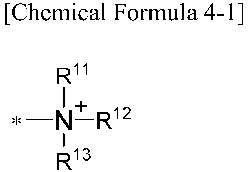 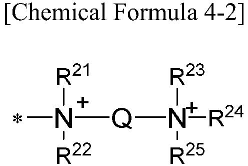 in Chemical Formulas 4-1 and 4-2,
Q is a substituted or unsubstituted alkylene group having 2 to 20 carbon atoms, and
R¹¹ to R¹³, and R²¹ to R²⁵are each independently a substituted or unsubstituted alkyl group having 1 to 20 carbon atoms, a substituted or unsubstituted cycloalkyl group having 3 to 20 carbon atoms, a substituted or unsubstituted aryl group having 6 to 20 carbon atoms, a substituted or unsubstituted heterocyclic group having 2 to 20 carbon atoms comprising one or more heteroatoms selected from the group consisting of N, O and S, or two adjacent groups among R¹¹ to R¹³, R²¹ and R²², or two adjacent groups among R²³ to R²⁵ may be connected to each other to form a substituted or unsubstituted N-containing heterocyclic group having 2 to 20 carbon atoms.

More specifically, Q may be an alkylene group having 2 to 6 carbon atoms which is unsubstituted or substituted with one or more alkyl groups having 1 to 6 carbon atoms, and even more specifically, may be ethylene, propylene, butylene, pentylene, or hexylene.

Also, R¹¹ to R¹³, and R²¹ to R²⁵may each independently be a substituted or unsubstituted alkyl group having 1 to 12 carbon atoms such as a methyl group, an ethyl group, a propyl group, a butyl group, a pentyl group, a hexyl group, a dimethylaminohexyl group, a dimethylaminopentyl group, a dimethylaminobutyl group, a dimethylaminopropyl group, or a dimethylaminoethyl group; a substituted or unsubstituted cycloalkyl group having 3 to 12 carbon atoms such as an adamantyl group; a substituted or unsubstituted aryl group having 6 to 12 carbon atoms such as a phenyl group, a benzyl group, or a dimethylphenyl group; or a substituted or unsubstituted heterocyclic group having 3 to 12 carbon atoms comprising one or more heteroatoms selected from the group consisting of N, O and S such as a thiophenyl group, a furanyl group, a pyrrole group, an imidazolyl group, a pyridinyl group, a bipyridinyl group, a pyrimidyl group, a pyrrolidinyl group, a piperidinyl group, or an azepanyl group; or two adjacent groups among R¹¹ to R¹³, R²¹ and R²², or two adjacent groups among R²³ to R²⁵ are connected to each other to form a heterocyclic group having 3 to 8 carbon atoms such as a pyrrolidinyl group, a piperidinyl group, an imidazolyl group, an azepanyl group, or a 5-azoniaspiro[4,4]nonyl group, wherein the heterocyclic group may be substituted with one or more alkyl groups having 1 to 6 carbon atoms or may be unsubstituted.

More specifically, in Chemical Formula 2, Z is trimethyl ammonium, triethyl ammonium, diethylmethyl ammonium, dimethylethyl ammonium, tripropyl ammonium, tributyl ammonium, N-methylpyrrolidinium, N-methyl piperidinium, or 6-(dimethylamino)-N,N,N-trimethylhexan-1-aminium; or may be selected from the group consisting of those derived from 4,4'-Trimethylenebis(1-methylpiperidine), N,N,N',N'-tetramethyl-1,6-hexanediamine, N,N,N',N'-tetramethyl-1,5-pentanediamine, N,N,N',N'-tetramethyl-1,4-butanediamine, N,N,N',N'-tetramethyl-1,3-propanediamine, and N,N,N',N'-tetramethyl-1,2-ethanediamine, respectively: 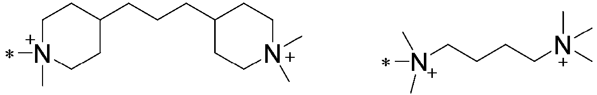 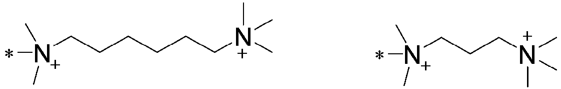 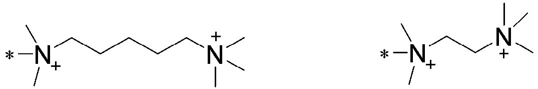 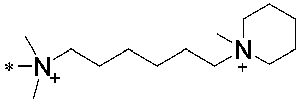 in the formula, * is a bonding position with L in Chemical Formula 2.

Also, in Chemical Formula 2, Y is an anionic group, specifically, may be a chloride ion, a bromide ion, an iodide ion, a hydroxide ion(OH⁻), a bicarbonate ion (HCO₃⁻), a dihydrogen phosphate ion (H₂PO₄⁻), a hydrogen phosphate ion (HPO₄²⁻), or a phosphate ion (PO₄³⁻).

More specifically, Chemical Formula 2 may be represented by Chemical Formula 2a below.

[Chemical Formula 2a] *-L-(NR₃)⁺· (Y')⁻

in Chemical Formula 2a, R is as defined above, and (Y')⁻ is the same as Y.

For example, when (Y')⁻ is OH⁻ in Chemical Formula 2a, Chemical Formula 2 may be any one of the following.

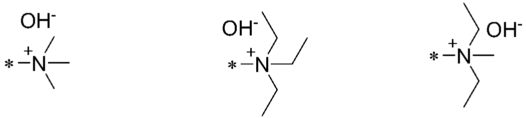

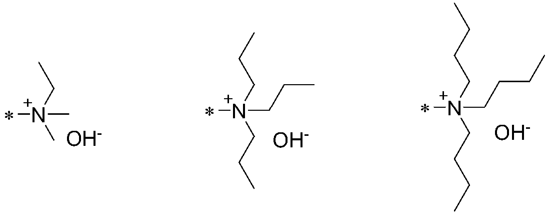

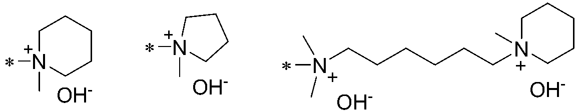

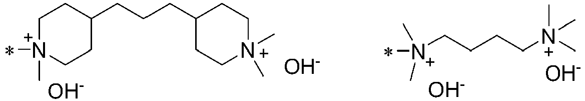

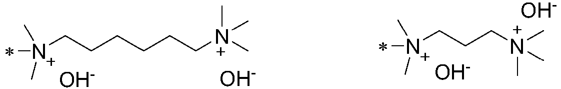

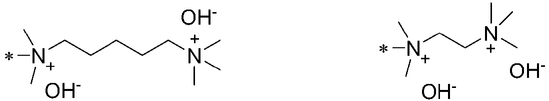

Meanwhile, in Chemical Formula 1, n represents the number of repeating units, and may be determined according to the molecular weight of the compound represented by Chemical Formula 1. Specifically, n is 1 or more, or 2 or more, or 10 or more, and may be 1000 or less, or 500 or less.

For example, the ion conductive compound may be a compound represented by Chemical Formula 1a-1 or 1a-2 below, but is not limited thereto: 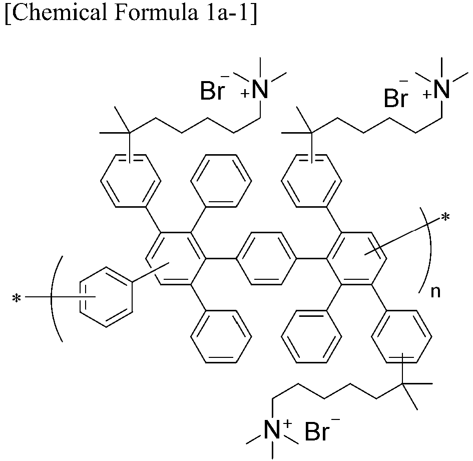 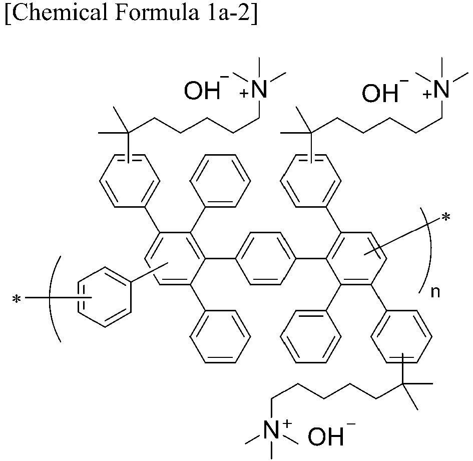 in Chemical Formula 1a-1 or 1a-2, n is an integer of 1 or more.

Also, the ion conductive compound may have a weight average molecular weight (Mw) of 30 to 900 kDa, more specifically 50 to 500 kDa.

In the present invention, the weight average molecular weight of the ion conductive compound may be measured using gel permeation chromatography, and specific measurement methods and conditions are as described in Experimental Examples below.

Also, in the ion conductive compound, the degree of functionalization (DF) can be adjusted to control the ion exchange capacity (IEC) (meq./g).

IEC is a numerical value representing the ion transport ability of a unit molecule. A theoretical value can be derived through the ratio of the number of functional groups to the weight of a polymer unit. As an experimental method, it can be calculated using a titration method and an NMR analysis method.

In the case of the titration method, for a membrane doped in the form of a chloride counter ion by immersion in a 1M NaCl aqueous solution for 24 hours, titration is performed using a titration instrument or according to the Mohr titration method, and IEC can be calculated according to Equation 1 below using the measured value of the result. $IEC \left(meq../g\right) = \left({ΔV}_{AgNO 3}\times {C}_{AgNO 3}\right) / {W}_{dry}$

In Equation 1,
V_{AgNO3} is the amount (mL) of 0.1M AgNO₃ aqueous solution added until the end point,
C_{AgNO3} is the concentration of the AgNO₃ aqueous solution, which is 0.1 mol/L,
W_{dry} is the dry weight of the anion exchange membrane before the titration test.

Meanwhile, measurement of the IEC value through ¹H-NMR analysis can be performed according to the methods disclosed in Journal of polymer science, part B: Polymer Physics 2013, 51(24), 1736-1742 and Macromolecules 2009, 42(21), 8316-8321.

The IEC of the ion conductive compound according to the present invention may be 1.0 meq./g or more, more specifically 1.5 meq./g or more, or 1.7 meq./g or more, or 1.8 meq./g or more, and 3.1 meq./g or less, or 2.9 meq./g or less, or 2.5 meq./g or less. As such, the ion conductive compound according to the present invention can control the IEC in a wide range compared to a conventional polyphenylene-based ion conductive polymer having an equivalent level of Mw, and also can exhibit better ion conductivity because it has a relatively high IEC value.

Meanwhile, in the present invention, the IEC of the ion conductive compound was measured by an ¹H NMR analysis method, and the specific measurement method and conditions are as described in Experimental Examples below.

The ion conductive compound described above can be prepared, for example, by a preparation method comprising:
a first step of preparing an intermediate comprising a structure represented by Chemical Formula 7 below by reacting a compound comprising a structure represented by Chemical Formula 5 below (hereinafter referred to as 'compound precursor') with one or more kinds among compounds represented by Chemical Formula 6 below in the presence of a strong acid; and
a second step of reacting the intermediate with a raw material forming a quaternary ammonium-based cationic functional group: 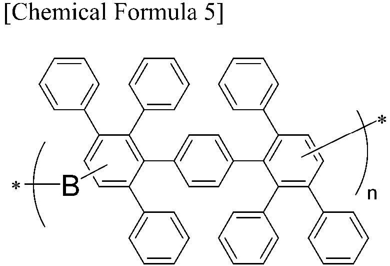
in Chemical Formula 5,
B is an arylene group having 6 to 18 carbon atoms, and
n is an integer of 1 or more,

   [Chemical Formula 6] HO-L-X
in Chemical Formula 6,
L is a branched alkylene group having 3 to 30 carbon atoms, and
X is a halogen group, 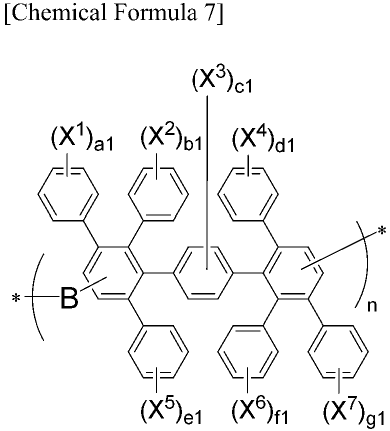
in Chemical Formula 7,
B is as defined in Chemical Formula 5,
X¹ to X⁷ are each independently represented by Chemical Formula 8 below,
a1 to g1 are each independently an integer of 0 or 1, provided that at least one of a1 to g1 is an integer of 1, and
n is an integer of 1 or more,

   [Chemical Formula 8] *-L-X
in Chemical Formula 8,
L is a branched alkylene group having 3 to 30 carbon atoms, and
X is a halogen group.

In addition, the preparation method according to the present invention may further comprise a step of preparing a compound precursor by reacting bistetracyclone with one or more kinds of ethynyl substituted aromatic compounds as a dienophile before the first step of preparing an intermediate.

Hereinafter, each step will be described.

### (Synthesis step of compound precursor)

The synthesis step of compound precursor is a step of preparing a compound comprising a structure represented by Chemical Formula 5 through a Diels-Alder reaction.

In the present invention, the compound precursor can be prepared according to the methods described in the literature Zinaida B. Shifrina, Marina S. Averina, Alexander L. Rusanov, Manfred Wagner, and Klaus Mullen, Branched Polyphenylenes by Repetitive Diels-Alder Cycloaddition, Macromolecules 2000 33 (10), 3525-3529, DOI: 10.1021/ma991369f, and J. K. Stille, F. W. Harris, R. O. Rakutis, H. Mukamal, Diels-Alder polymerizations: Polymers containing controlled aromatic segments, Journal of Polymer Science Part B: Polymer Letters, vol 4, 791-793 (1966). https://doi.org/10.1002/pol.1966.110041023, and reaction temperature, reaction concentration, and reaction time are appropriately changed according to the physical properties of the compound precursor to be finally prepared such as weight average molecular weight.

In the present invention, the preparation step of the compound precursor may be specifically performed by Diels-Alder reaction of bistetracyclone as a diene with one or more kinds of ethynyl substituted aromatic compounds as a dienophile.

By the reaction described above, a compound precursor comprising a structure represented by Chemical Formula 5, for example, Diels-Alder poly(phenylene) polymer (DAPP) is prepared.

The ethynyl substituted aromatic compound may specifically be a compound represented by Chemical Formula 9 below:

[Chemical Formula 9] R^{a}C≡C-B-C≡CR^{b}

in Chemical Formula 9,
B is an arylene group having 6 to 18 carbon atoms, and
R^{a} and R^{b} are each independently hydrogen, or an alkyl group having 1 to 30 carbon atoms.

Specific examples include 1,4-diethynylbenzene, 4,4'-diethynylbiphenyl, or 1,3-diethynylbenzene, and any one or a mixture of two or more of these may be used.

In the Diels-Alder reaction, bistetracyclone and the ethynyl substituted aromatic compound may be added in a molar ratio of 1.2:1 to 1:1.2, and more specifically, in a molar ratio of 1:1. In addition, the bistetracyclone and the ethynyl substituted aromatic compound may be commercially available or may be directly prepared. For example, in the case of bistetracyclone, it can be prepared by reacting 1,3-diphenyl-propanone and 1,4-bisbenzil.

Also, the Diels-Alder reaction may be performed under a nitrogen atmosphere.

Also, the Diels-Alder reaction may be performed at a temperature of 100 to 330°C, more specifically 110 to 220°C.

Also, as a solvent or a reaction medium in the Diels-Alder reaction, an ether-based compound such as diphenyl ether (Ph₂O); an aromatic hydrocarbon-based compound such as toluene (PhMe) or xylene (PhMe₂); or a mixture thereof may be used.

As a result of the Diels-Alder reaction, DAPP is produced in the reaction product, and the produced DAPP can be obtained in a solid phase through a precipitation reaction.

The precipitation reaction can be performed according to a conventional DAPP precipitation method, and is not particularly limited. For example, in the present invention, after the completion of the Diels-Alder reaction, the temperature of the reaction product is lowered to 100 to 120°C, a solvent such as toluene (PhMe) is added to dilute it, and when the temperature of the diluted reaction product is lowered to room temperature, the reaction product is added dropwise to an alcohol such as methanol; or a conventional non-solvent such as hexane or acetone. As a result, DAPP produced in the reaction product is precipitated in a solid phase.

Thereafter, DAPP can be obtained with high purity through common separation and purification processes such as drying, washing, and separation of impurities after separation of the precipitated DAPP.

### (First step)

The first step is a step of preparing an intermediate comprising a structure represented by Chemical Formula 7 by reacting the compound precursor prepared in the synthesis step of compound precursor with one or more kinds of branched alcohols, specifically, compounds represented by Chemical Formula 6, in the presence of a strong acid.

Specifically, the first step may be performed by dissolving the compound precursor comprising a structure represented by Chemical Formula 5 and one or more kinds among the compounds represented by Chemical Formula 6 in a solvent under a nitrogen atmosphere, and then performing a substitution reaction by adding a strong acid.

Specific examples of the compound represented by Chemical Formula 6 include 7-bromo-2-methyl-2-heptanol, 7-bromo-2-ethyl-2-heptanol, or 7-bromo-2-methyl-2-pentanol, and any one or a mixture of two or more of these may be used.

The input amount of the compound represented by Chemical Formula 6 can be appropriately selected in consideration of the degree of substitution of ion conductive groups in the pendant aryl group or the backbone aryl group in the compound precursor. For example, the compound represented by Chemical Formula 6 may be added in a molar ratio of 1 to 10, more specifically 3 to 7, relative to 1 mole of the compound comprising a structure represented by Chemical Formula 5, which is the compound precursor.

In addition, dichloromethane or the like can be used as a solvent for dissolving the compound precursor and the compound represented by Chemical Formula 6.

In addition, the dissolution process is performed at 0 to 30°C.

After dissolution is complete, a strong acid is added dropwise to the resulting solution and mixed.

The strong acid acts as a primary catalyst for initiating the reaction. Examples of the strong acid include trifluoromethane sulfonic acid (TFSA), or methanesulfonic acid, and any one or a mixture of two or more of these may be used. Or Eaton's reagent (comprising 7.7 wt% P₂O₅ in methanesulfonic acid) comprising methanesulfonic acid may be used.

Also, the strong acid may be used in a molar ratio of 2 to 20, more specifically 6 to 14, based on 1 mole of the compound precursor.

After mixing the strong acid, the resulting reaction mixture may be heated from 0°C to room temperature, and a stirring process may be further performed for 6 to 48 hours.

As a result of the process, the compound represented by Chemical Formula 7 is produced in the reaction product, and the produced compound can be obtained in a solid phase by adding the reaction product dropwise to an alcohol such as methanol; or a conventional non-solvent such as hexane or acetone to perform a precipitation reaction.

Thereafter, common separation and purification processes such as washing, separation, and drying using a conventional non-solvent can be further performed.

Also, after the separation and purification process, the obtained product is redissolved in a solvent such as tetrahydrofuran (THF) or dichloromethane, and the resulting solution is added dropwise to an alcohol such as methanol; or a conventional non-solvent such as hexane or acetone to perform a precipitation reaction, whereby the intermediate can be obtained with high purity.

In the intermediate which is the result of the first step reaction, the degree of introduction of the branched side-chain structure functional groups of X¹ to X⁷ can be adjusted according to the equivalent ratio of reactants and the order of injection. In the present invention, the IEC of the final result can be determined according to the degree of functionalization.

### (Second step)

The second step is a step of preparing a compound comprising a structure represented by Chemical Formula 1 by reacting the intermediate prepared in the first step with a raw material forming a quaternary ammonium-based cationic functional group.

Specifically, the second step may be performed by dissolving the intermediate in a polar aprotic solvent and then performing a nucleophilic substitution reaction by adding a raw material forming a quaternary ammonium-based cationic functional group.

The raw material forming a quaternary ammonium-based cationic functional group is a nucleophile providing a quaternary ammonium-based cationic functional group reaction, and during the reaction, a halogen group (X) in the intermediate is substituted with a cationic group of the nucleophile.

As the raw material forming a quaternary ammonium-based cationic functional group, a tertiary amine-based compound, a quaternary ammonium salt, or a mixture thereof may be used.

Specifically, examples of the tertiary amine-based compound include trimethylamine (TMA), triethylamine, tripropylamine, tributylamine, N-methylpyrrolidine, N-methylpiperidine, 4,4'-Trimethylenebis(1-methylpiperidine), N,N,N',N'-tetramethyl-1,6-hexanediamine, N,N,N',N'-tetramethyl-1,5-pentanediamine, N,N,N',N'-tetramethyl-1,4-butanediamine, N,N,N',N'-tetramethyl-1,3-propanediamine, or N,N,N',N'-tetramethyl-1,2-ethanediamine, and any one or a mixture of two or more of these may be used.

Also, specifically, examples of the quaternary ammonium salt include 6-(dimethylamino)-N,N,N-trimethylhexan-1-aminium salt and the like.

The input amount of the raw material forming a quaternary ammonium-based cationic functional group can be determined according to the degree of functionalization. For example, the raw material forming a quaternary ammonium-based cationic functional group may be added in a molar ratio of 3 to 18, or 6 to 14, relative to 1 mole of the intermediate.

Meanwhile, when Y in Chemical Formula 2 is a hydroxide ion, the counter-ion form can be changed by immersing the product after the second step reaction in a strong base aqueous solution such as sodium hydroxide or potassium hydroxide. Also, when Y in Chemical Formula 2 is a bicarbonate ion, the counter-ion form can be changed by immersing it in a weak base aqueous solution such as sodium bicarbonate. Also, when Y in Chemical Formula 2 is a chloride ion, the counter-ion form can be changed by immersing it in an aqueous solution such as sodium chloride.

In addition, in the nucleophilic substitution reaction, examples of the polar aprotic solvent include n-methyl pyrrolidone (NMP), dimethyl acetamide, dimethyl sulfoxide, or dimethyl formamide, and any one or a mixture of two or more of these may be used. The amount used is not particularly limited and can be appropriately selected in consideration of reaction efficiency.

As a result of the reaction between the intermediate and the raw material forming a quaternary ammonium-based cationic functional group, a compound comprising a structure represented by Chemical Formula 1 and optionally a structure represented by Chemical Formula 5 is produced in the reaction product. The produced compound can be obtained in a solid phase by adding the reaction product dropwise to an ether such as dimethyl ether or tetrahydrofuran; or a conventional non-solvent such as hexane or acetone to perform a precipitation reaction.

Thereafter, an ion conductive compound comprising a structure represented by Chemical Formula 1 and optionally a structure represented by Chemical Formula 5 can be obtained with high purity and high yield through common separation and purification processes such as washing, separation, and drying.

The ion conductive compound prepared through the preparation method described above comprises an aromatic polymer segment formed through Diels-Alder polymerization and has a structure in which a quaternary ammonium-based cationic functional group is bonded to a pendant phenyl group by a branched linker, and exhibits excellent ion conductivity. Also, it can exhibit improved dimensional stability while maintaining excellent solubility. Also, the ion conductive polymer exhibits improved film-forming processability due to excellent solubility compared to a relatively high molecular weight. As a result, the ion conductive polymer can be used as various ion exchange materials such as an ion conductive single-layered membrane, an ion conductive reinforced membrane, an ion conductive composite membrane, an ion conductive reinforced composite membrane, an ion conductive cross-linked membrane, an electrolyte membrane, a separator, a water treatment membrane, or an ionomer for a membrane-electrode assembly (MEA), and is particularly useful for an ion conductive membrane. Specifically, the ion conductive polymer can be used as an ion exchange material for a system using electrochemistry such as a water electrolysis system, a fuel cell, a redox flow battery, a carbon dioxide reduction system, an electrochemical ammonia production and decomposition system, an electrodialysis (ED) system, a reverse electrodialysis (RED) system, or a capacitive deionization (CDI) system.

Thus, according to another embodiment of the invention, an ion conductive membrane comprising the ion conductive compound is provided.

The ion conductive membrane may be prepared by a conventional ion conductive membrane preparation method except for using the ion conductive compound described above.

For example, a resin composition further comprising at least one of various additives such as the ion conductive compound and, if necessary, a main solvent, a co-solvent, an antioxidant, a thermal stabilizer, a lubricant, a tackifier, a plasticizer, a cross-linking agent, an anti-foaming agent, a dispersant, and the like is prepared, and it can be prepared into a molded product such as a fiber or a film by any method such as extrusion, spinning, rolling, or casting.

More specifically, a resin composition is prepared by dissolving an ion conductive compound and optionally one or more kinds of additives in a solvent such as N-methylpyrrolidone, dimethylformamide, dimethyl sulfoxide, or dimethylacetamide, and the prepared composition is applied to a plate such as a glass plate or a support for film production and dried to obtain a film having a thickness of several to hundreds of µm, specifically 10 to 120 µm, and then can be prepared by detaching from the plate or the support for film production.

Since the ion conductive membrane comprises the ion conductive polymer described above, it can exhibit low water uptake (WU) and swelling ratio along with excellent ion conductivity.

Specifically, the ion conductive membrane has an ion exchange capacity (IEC) measured after doping in the form of a chloride counter ion by immersion in a 1M NaCl aqueous solution for 24 hours of 1.0 meq./g or more, more specifically 1.8 meq./g or more, or 1.8 to 3.0 meq./g.

The ion exchange capacity of the ion conductive membrane can be measured by the Mohr titration method, and the specific measurement method and conditions are as described in Experimental Examples below.

In addition, the ion conductive membrane has an ion conductivity (IC) (σ) of 70 mS/cm or more, more specifically 80 to 130 mS/cm, calculated according to Equation 2 below using a resistance value measured at 60°C using a 4-probe electrode after doping in the form of a hydroxide counter-ion by immersion in a 1M KOH aqueous solution for 24 hours. $Ion Conductivity \left(σ, mS/cm\right) = L / \left(R\times W\times T\right)$ In Equation 2,
L is the distance (cm) between Pt Probes in a measurement cell,
R is the resistance value (Ω) of the measured membrane,
W is the width (cm) of the membrane doped with hydroxide ions, and
T is the thickness (cm) of the membrane doped with hydroxide ions.

In addition, the ion conductive membrane has a water uptake (WU) calculated according to Equation 3 below of 50 to 85 wt% after doping in the form of a hydroxide counter-ion by immersion in a 1M KOH aqueous solution for 24 hours and drying at 80°C for 15 hours. $WU \left(wt%\right) = \left({W}_{wet}-{W}_{dry}\right) \times 100 / {W}_{dry}$

(In Equation 3,
W_{wet} is the weight (g) of the ion conductive membrane measured after doping in the form of a hydroxide counter-ion by immersion in a 1M KOH aqueous solution for 24 hours, and
W_{dry} is the weight (g) of the ion conductive membrane measured after drying the ion conductive membrane for which W_{wet} was measured in an 80°C vacuum oven for 15 hours)

Also, the ion conductive membrane has a Swelling Ratio calculated according to Equation 4 below of 8 to 15% after doping in the form of a hydroxide counter-ion by immersion in a 1M KOH aqueous solution for 24 hours and drying at 80°C for 15 hours. $Swelling Ratio \left(%\right) = \left({L}_{wet}-{L}_{dry}\right) \times 100 / {L}_{dry}$

(In Equation 4,
L_{wet} is the length (mm) of the ion conductive membrane measured after doping in the form of a hydroxide counter-ion by immersion in a 1M KOH aqueous solution for 24 hours, and
L_{dry} is the length (mm) of the ion conductive membrane measured at room temperature after drying the ion conductive membrane for which L_{wet} was measured in a vacuum oven at 60°C to 80°C for 15 hours)

Hereinafter, preferred examples are presented to aid understanding of the present invention, but the following examples are merely to illustrate the present invention and it is clear to those skilled in the art that various changes and modifications are possible within the scope and spirit of the present invention, and it is natural that such changes and modifications belong to the appended claims.

Meanwhile, unless otherwise stated in the present specification, room temperature (ordinary temperature) usually means 20 to 25°C, which is a laboratory temperature, and atmospheric pressure usually means 0.95 to 1.05 atm, which is a laboratory pressure.

NMR analysis for the compounds prepared in Synthesis Examples and Examples was analyzed under conditions of room temperature and spin 20 Hz using a Bruker AVANCE III HD 600 MHz device (manufactured by Bruker).

In addition, the molecular weight of the compound prepared in Synthesis Examples is a weight average molecular weight (g/mol), and was measured through gel permeation chromatography analysis. Specifically, it was measured using an Agilent 1260/Malvern TDA305 device (manufactured by Agilent) under conditions of Column: PLgel 500Å+100Å+50Å (manufactured by Agilent) and Standard: polystyrene molecular weight multiple Mws by molecular weight.
Sample preparation conditions (solvent): Use THF as solvent and use after 0.1 µm PTFE filter, sample concentration 2.0 mg/ml
Column conditions: Column GMHxl,
solvent THF,
sample injection volume 200 µl,
flow rate 1.0 ml/min
Analysis temperature: room temperature
Refractive index analysis

### <Preparation of compound precursor>

Compound precursor(iv) used in Examples and Comparative Examples was prepared according to the methods described in the literature Zinaida B. Shifrina, Marina S. Averina, Alexander L. Rusanov, Manfred Wagner, and Klaus Mullen, Branched Polyphenylenes by Repetitive Diels-Alder Cycloaddition, Macromolecules 2000 33 (10), 3525-3529, DOI: 10.1021/ma991369f and J. K. Stille, F. W. Harris, R. O. Rakutis, H. Mukamal, Diels-Alder polymerizations: Polymers containing controlled aromatic segments, Journal of Polymer Science Part B: Polymer Letters, vol 4, 791-793 (1966). https://doi.org/10.1002/pol.1966.110041023, and reaction temperature, reaction concentration, and reaction time were appropriately changed according to the molecular weight of the compound precursor to be finally prepared.

For example, the compound precursor(iv) (Mw: 39 kDa) used in Example 1 was prepared as in Synthesis Example 1 below.

### Synthesis Example 1: Preparation of compound precursor

### Step 1: Synthesis of bistetracyclone

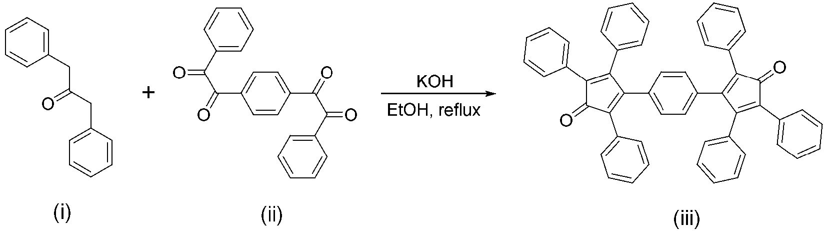

1,4-bisbenzil (ii) (20.0 g, 58.421 mmol), 1,3-diphenyl-propanone (i) (25.798 g, 122.684 mmol), and anhydrous EtOH (540 mL) were added to a 1000 mL round bottom flask, and stirred for 30 minutes under reflux conditions while maintaining a nitrogen atmosphere. After confirming that the opaque yellow reaction mixture became transparent fluorescent yellow, a solution prepared by putting KOH (6.555 g, 116.842 mmol, 2.0 eq.) and anhydrous EtOH (60 mL) in a 100 mL round bottom flask in advance and stirring at room temperature was added to the reaction mixture, and stirred for 5 hours under reflux conditions. After the temperature of the reaction product obtained as a result was lowered to room temperature, it was filtered to separate and obtain a precipitate. The precipitate was washed with EtOH and dried to obtain bistetracyclone (iii) in the form of a black solid. Also, for the filtrate separated as a result of the filtration, the solvent was evaporated, and then it was dissolved in dichloromethane (DCM) while heating, and recrystallized. The purity of the obtained bistetracyclone (iii) was confirmed through ¹H-NMR (Total yield: 26.305 g, purity: 98%).

¹H-NMR (CDCl₃, 600MHz): δ 6.773 (s, 4H), 6.91 (d, J= 7.8Hz, 4H), 7.17-7.28 (26H)

### Step 2: Synthesis of compound precursor(iv)

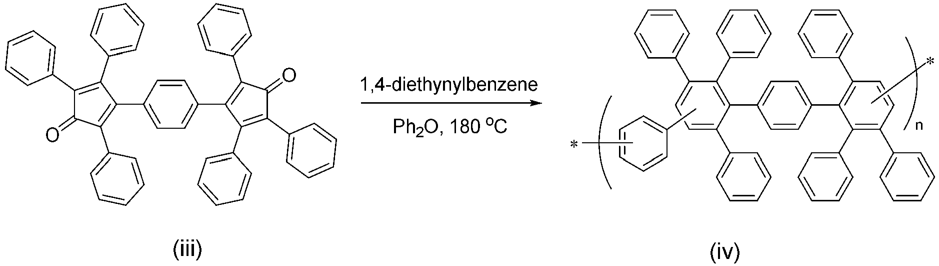

Bistetracyclone (iii) (27.0 g, 39.083 mmol) prepared in Step 1, 1,4-diethynylbenzene (4.931 g, 39.083 mmol) and Ph₂O (216 mL) were added to a 500 mL round bottom flask, purged under nitrogen stream for 1 hour, and then stirred at 180°C for 24 hours while maintaining a constant temperature.

After the heating was terminated and when the temperature of the reaction product dropped to 100°C, toluene (260 mL) was added to dilute the reaction product. When the temperature of the diluted reaction product was lowered to room temperature, the reaction product was injected into hexane (2500 mL) in a dropwise manner while stirring. After 2 to 3 hours, stirring was stopped, and the solid produced as a result of the reaction was separated and dried. The dried solid was dissolved in THF (430 mL) and then injected into acetone (2500 mL) in a dropwise manner while stirring. The solid part was separated and dried under reduced pressure to obtain poly(phenylene) (iv) in the form of a yellowish-white solid as a compound precursor (Yield: 29.98 g, purity: 99% excluding residual solvent).

¹H-NMR (CDCl₃, 600MHz): δ 6.20-6.35 (4H), 6.61-6.68 (8H), 6.82-6.96 (16H), 7.06-7.26 (10H), 7.43 (s, 2H)

### Example 1

### Step 1: Synthesis of Brominated Poly(phenylene)

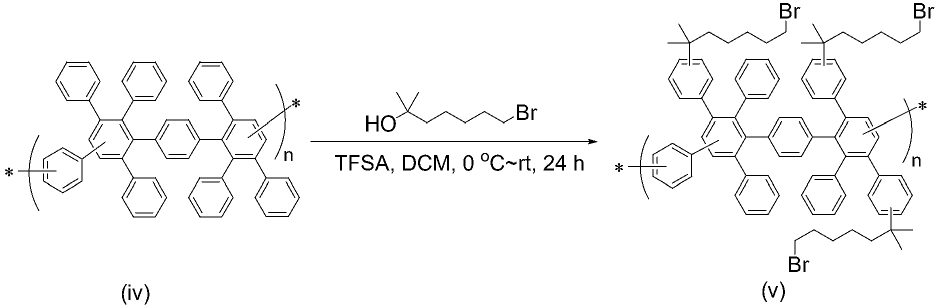

Poly(phenylene) (iv) (10.0 g, 13.14 mmol), which is the compound precursor prepared in Synthesis Example 1, and 7-bromo-2-methyl-2-heptanol (BMH) (14.565 g, 69.65 mmol) as a branched alcohol were put into a 250 mL round bottom flask, dichloromethane (200 mL) was injected in a nitrogen atmosphere to dissolve the poly(phenylene), and then the mixture was stirred at 0°C. Trifluoromethane sulfonic acid (TFSA, 12.30 mL, 139.29 mmol) was injected into the resulting mixed solution in a dropwise manner.

The resulting reaction mixture was slowly heated from 0°C to room temperature, and then stirred for 24 hours. The resulting reaction product was injected into MeOH (1000 mL) in a dropwise manner, and then stirred for 3 hours. After the stirring was complete, the supernatant was discarded, and a reaction product was obtained. The obtained reaction product was washed several times with methanol (MeOH), which is a non-solvent. The solid content of the washed reaction product was separated and dried, and then THF (150 mL) was added and dissolved. The resulting solution was injected into MeOH (1000 mL) in a dropwise manner, and then stirred for 3 hours. After the stirring was complete, the solid content was separated and dried under reduced pressure to obtain brominated poly(phenylene)(v) (Yield: 18 g).

¹H-NMR (CDCl₃, 600MHz): δ 0.55-1.95 (m, 14H), 2.95-3.45 (2H), 6.05-7.55 (m, aromatic)

### Step 2: Synthesis of Aminated Poly(phenylene)

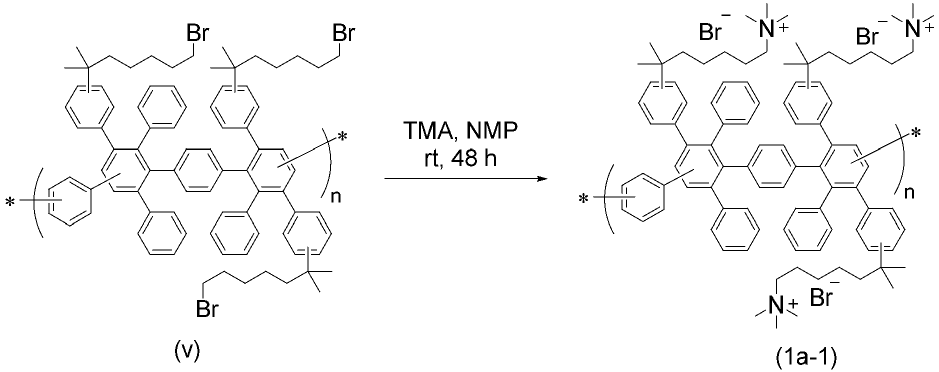

Brominated poly(phenylene)(v) (10 g, 7.38 mmol) prepared in Step 1 was put into a 250 mL round bottom flask and dissolved in NMP (87 mL, 10 wt%). Trimethylamine (TMA, 4.2 M solution in EtOH, 21.09 mL) was added to the resulting solution, and stirred for 48 hours. The reaction product obtained as a result was injected into ethyl ether (1000 mL) in a dropwise manner, and stirred for 3 hours. After the stirring was complete, the supernatant was discarded from the resulting reaction product, and then acetone (1000 mL) was added as a non-solvent to the remaining reaction product, and washed while stirring. The washed solid was separated and dried to obtain aminated poly(phenylene) (1a-1) (Yield: 11 g).

¹H-NMR (CDCl₃, 600MHz): δ 0.60-1.75 (m, 14H), 2.80-3.10 (9H), 3.15-3.30 (m, 2H), 5.90-7.70 (m, aromatic)

### Examples 2 to 8

Compound (1a-1) was prepared in the same manner as in Example 1, except for using compound (iv) having various molecular weights as a compound precursor for preparing aminated poly(phenylene) as described in Table 1 below, and performing under the described conditions.

**[Table 1]**

| | Step 1 | | | | | Step 2 | |
|---|---|---|---|---|---|---|---|
| | Mw of compound (iv) (kDa) | Input amount of compound (iv) (mmol) | Input amount of BMH (mmol) | Input amount of TFSA (mmol) | Mw of compoun d (v) (kDa) | Input amount of compound (v) | Input amount of Trimethylamine (in EtOH, M) |
| Example 1 | 39 | 13.14 | 69.65 | 139.29 | 71 | 7.38 | 4.2 |
| Example 2 | 53 | 13.14 | 39.42 | 78.84 | 73 | 7.38 | 4.2 |
| Example 3 | 59 | 13.14 | 69.65 | 139.29 | 94 | 7.38 | 4.2 |
| Example 4 | 65 | 13.14 | 69.65 | 139.29 | 134 | 7.38 | 4.2 |
| Example 5 | 90 | 13.14 | 69.65 | 139.29 | 221 | 7.38 | 4.2 |
| Example 6 | 112 | 13.14 | 39.42 | 78.84 | 150 | 7.38 | 4.2 |
| Example 7 | 151 | 13.14 | 72.27 | 144.54 | 353 | 7.38 | 4.2 |
| Example 8 | 165 | 13.14 | 69.65 | 139.29 | 470 | 7.38 | 4.2 |

In Table 1, the weight average molecular weight (Mw) for the compound finally prepared in each step was measured in the same manner as in (1-1) weight average molecular weight measurement method described in Experimental Example 1 below.

### Comparative Example 1

Polyphenylene ion conductive polymer (b) was prepared according to the following reaction scheme under the conditions described in Table 2 below.

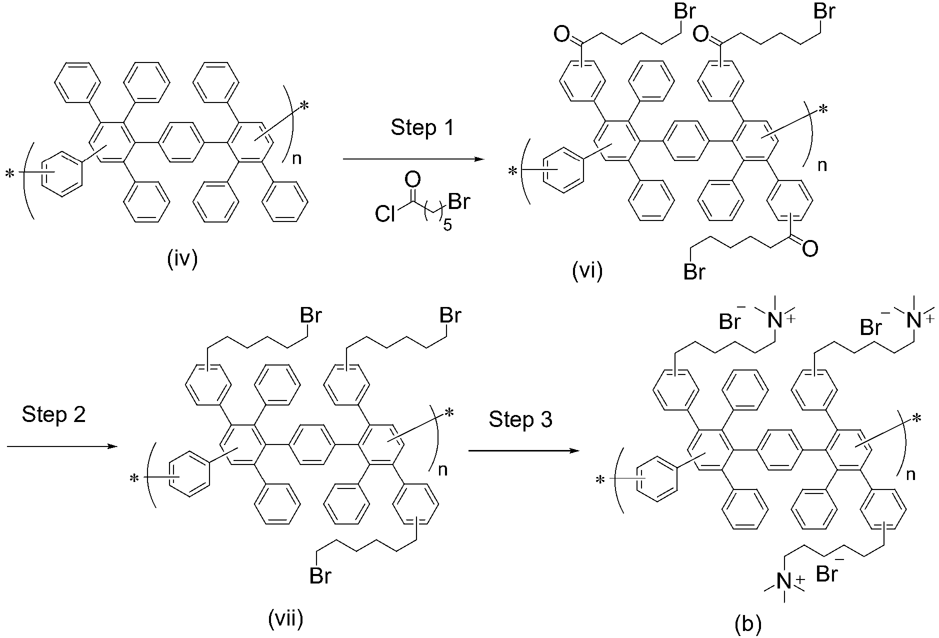

### Step 1: Synthesis of Poly(phenylene)-KBr

Compound precursor (iv) (10.0 g, 13.14 mmol) prepared in Synthesis Example 1 and 6-bromohexanoyl chloride (8.43 g, 39.48 mmol) were put into a 250 mL round bottom flask, dichloromethane (500 mL) was further injected in a nitrogen atmosphere to dissolve the poly(phenylene), and then the mixture was stirred at 0°C. AlCl₃ (5.26 g, 39.48 mmol, 3.0 eq) was injected into the resulting mixed solution, and the resulting reaction mixture was slowly heated from 0°C to room temperature, and then stirred for 6 hours. The resulting reaction mixture was poured into 1 L of DI water, and dichloromethane was evaporated at 40°C while a solid was precipitated.

The precipitated solid was separated from the DI water and dried, and the dried solid was dissolved in DCM (200 mL), then injected into 1 L of acetone in a dropwise manner, and stirred. The solid part precipitated as a result was separated and dried under reduced pressure to obtain intermediate compound (vi) as a yellow solid (12.86 g, 76%).

### Step 2: Synthesis of Brominated Poly(phenylene) (vii)

Et₃SiH (4.14 g, 35.6 mmol), TFA (120 mL), and 1,2-DCE (500 mL) were added to the intermediate compound (vi) (10 g, 7.74 mmol), and a reduction reaction was performed while refluxing for 24 hours. After completion of the reaction, when the temperature of the reaction mixture reached room temperature, the reaction mixture was poured into MeOH (1 L), then the precipitated solid was filtered and dried. The dried solid was dissolved in DCM (100 ml), and then injected into acetone (1 L) in a dropwise manner while stirring. After washing for 3 hours, stirring was stopped, and the solid part was separated and dried. Brominated Poly(phenylene) (vii) (5.59 g) was obtained as a result.

### Step 3: Synthesis of Aminated Poly(phenylene) (b)

Brominated poly(phenylene)(vii) (10 g, 7.38 mmol) prepared above was put into a 250 mL round bottom flask and dissolved in NMP (87 mL, 10 wt%). Trimethylamine (TMA, 4.2 M solution in EtOH, 21.09 mL) was added to the resulting solution, and stirred for 48 hours. The reaction product obtained as a result was injected into ethyl ether (1000 mL) in a dropwise manner, and stirred for 3 hours. After the stirring was complete, the supernatant was discarded from the resulting reaction product, and then acetone (1000 mL) was added as a non-solvent to the remaining reaction product, and washed while stirring. The washed solid was separated and dried to obtain aminated poly(phenylene) (b) (Yield: 11 g).

### Comparative Example 2

An ion conductive compound was prepared in the same manner as in Comparative Example 1, except for changing to the conditions described in Table 1 below.

However, the ion conductive compound prepared in Comparative Example 2 was not dissolved in a solvent. Accordingly, the molecular weight was measured using some of the polymer dissolved in the solvent, and processing into a membrane was impossible, so evaluation of membrane properties could not be performed.

**[Table 2]**

| | Step 1 | | | | Step 2 | | | | Step 3 | |
|---|---|---|---|---|---|---|---|---|---|---|
| | Mw of compound (iv) (kDa) | Input amount of compound (iv) (mmol) | Input amount of 6-Bromo Hexanoyl Chloride (mmol) | Input amount of AlCl₃ (mmol) | Input amount of compound (vi) (mmol) | Input amount of Et₃SiH (mmol) | Input amount of TFA (mL) | Mw of compound (vii) (kDa) | Input amount of compound (vii) | Input amount of Trimethylamine (in EtOH, M) |
| Comparative Example 1 | 83 | 13.14 | 39.48 | 39.48 | 7.74 | 35.6 | 120 | 172 | 7.38 | 4.2 |
| Comparative Example 2 | 120 | 13.14 | 39.48 | 39.48 | 7.74 | 35.6 | 120 | 250 | 7.38 | 4.2 |

In Table 2, the weight average molecular weight (Mw) or ion exchange capacity (IEC, meq./g) for the compound finally prepared in each step was measured in the same manner as in (1-1) weight average molecular weight and (2-2) ion exchange capacity measurement method described in Experimental Example 1 below.

### Experimental Example 1

### (1) Polymer analysis

FT-IR and NMR data were used for qualitative analysis such as functional groups and structures of the polymer compounds synthesized in Examples and Comparative Examples, and GPC data were utilized for quantitative analysis such as molecular weight.

### (1-1) Weight average molecular weight (Mw)

Analysis was performed according to the following conditions using gel permeation chromatography (GPC). Based on a calibration curve formed using a polystyrene standard foam, Mw values (g/mol) were derived from the analysis results. However, since GPC measurement is impossible for an ionic polymer, GPC was measured for a precursor polymer before a quaternization reaction.

### <GPC analysis conditions>

Instrument used: Agilent
Column: Agilent PL Mixded D, Agilent PLgel 100Å, Agilent PLgel 50Å
Sample concentration: 1 wt/vol% in tetrahydrofuran (THF)
Carrier: THF
Detection method: RI
Flow rate: 1.0 ml/min
Column temperature: 25 °C
Detector: Agilent RI detector

When preparing the calibration curve, a polystyrene standard foam having a molecular weight of 104 to 24,600 g/mol was used.

### (2) AEM evaluation

### (2-1) AEM sample preparation

### Step 1: Membrane preparation

2.0 g of the ion conductive polymer prepared in the Example or Comparative Example was put into a 70 ml vial and sufficiently dissolved with a solvent dimethylsulfoxide (DMSO, 35 g). The resulting polymer solution was filtered with a cotton filter to remove impurities contained in the polymer solution. The polymer solution from which impurities were removed was cast by spread casting on an 18 cm width x 18 cm length glass plate, and then dried in an oven at 70°C for 24 hours. After completion of drying, the glass plate was collected and a membrane was obtained.

### Step 2: Pretreatment

In the membrane prepared in Step 1, the counter ion of the quaternary ammonium functional group is I⁻ or Br⁻. This membrane can change the counter ion according to purpose, and this process is called doping. Depending on the doping solution, an AEM comprising an anionic counter ion such as Cl⁻, HCO₃⁻, or OH⁻ can be prepared. Also, a PEM comprising a phosphate anion form such as H₂PO₄⁻ can also be prepared.

### A. Chloride Doping (for IEC measurement)

The membrane prepared in Step 1 was put into a 1M NaCl aqueous solution at room temperature, and ion exchange was performed for 24 hours. After the completion of ion exchange, the membrane was taken out and sufficiently washed several times with distilled water. In order to clearly remove residual NaCl, the washed membrane was stored in distilled water for 24 hours and then used after drying.

### B. Hydroxide Doping (for IC, WU measurement, and MEA preparation)

In an environment where CO₂ is completely blocked, such as inside a glove box under an Argon atmosphere, the membrane prepared in Step 1 was put into a 1M KOH aqueous solution, and ion exchange was performed for 24 hours. After the completion of ion exchange, the membrane was taken out and sufficiently washed several times with distilled, deionized, Ar-gas bubbled water. In order to clearly remove residual KOH, the washed membrane was washed several times with distilled water, and then immersed in distilled water and stored for 24 hours before use. Since the membrane ion-exchanged in the form of a hydroxide ion forms a bicarbonate ion within minutes when contacting CO₂ in the air, contact with CO₂ was avoided.

### (2-2) Ion Exchange Capacity (IEC)

For the membrane doped with the chloride counter ion, the IEC value was measured through ¹H-NMR analysis according to the methods disclosed in Journal of polymer science, part B: Polymer Physics 2013, 51(24), 1736-1742 and Macromolecules 2009, 42(21), 8316-8321:
¹H-NMR analysis conditions>
Instrument used: 600 MHz Bruker NMR
acquisition time 2.73s
delay time 1s
number of scans 128
pulse 30°
solvent CDCl₃
Sample concentration: 2.5 wt%

### (2-3) Ion Conductivity (IC)

For the membrane doped with hydroxide ions, in-plane ion conductivity (IC) was measured using a 4-probe electrode (BekkTech Membrane Conductivity Test System). In a fuel cell system, in order to measure IC, a resistance value according to a change in relative humidity (RH) value is confirmed at a specific temperature. In a water electrolysis system, there is a difference in that the resistance value is measured by completely immersing the measurement cell in DI water so that the RH becomes 100% at a specific temperature.

Since measurement was performed using a sample doped with hydroxide ions, all pretreatment processes were performed in a CO₂-free atmosphere such as a glove box. Even in the process of measuring IC, Ar gas was continuously purged into a container containing the measurement cell so that the membrane was not exposed to CO₂. In the glove box, a specimen (applying an actual measured value for each sample) of 4 cm in width and 0.7 cm in length was mounted in a measurement cell (4-probe electrode cell) and rapidly moved to a container containing water for conductivity measurement using an Ar bag.

After sealing the container, it was connected to an IC measurement facility (BekkTech Membrane Conductivity Test System) in an Ar gas purge state. A resistance value at 80°C was measured, and IC was calculated according to Equation 2 below using the same (BekkTech Conductivity Testing Software). $Ion Conductivity \left(σ, mS/cm\right) = L / \left(R\times W\times T\right)$

In Equation 2,
L is the distance (cm) between Pt Probes in a measurement cell, which was 4.2 mm in the present experimental example,
R is the resistance value (Ω) of the measured membrane,
W is the width (cm) of the membrane doped with hydroxide ions,
T is the thickness (cm) of the membrane doped with hydroxide ions.

Also, resistance values at 60°C, 70°C and 80°C were respectively measured, and IC was calculated according to Equation 2.

### (2-4) WU (water uptake) and Swelling Ratio

WU is a measurement of the ratio of moisture absorbed per unit mass. Since weight changes of the AEM sample doped with hydroxide ions were measured, the experiment was performed in an argon-atmosphere glove box so as not to contact CO₂ as much as possible.

For the membrane doped with hydroxide ions by immersion in a 1M KOH aqueous solution for 24 hours, moisture on the surface of the membrane was wiped off as if lightly swept using KimWipe, and the weight (g) of the membrane in a wet state was measured (Wwet).

The membrane for which the measurement was completed was dried in an 80°C vacuum oven for 15 hours, and the weight (g) of the dry-state membrane was measured (W_{dry}). WU was calculated according to Equation 3 below using the measured values. $WU \left(wt%\right) = \left({W}_{wet}-{W}_{dry}\right) \times 100 / {W}_{dry}$

Swelling ratio represents a rate of change in physical size of the membrane due to moisture absorption. Using a sample for measuring water uptake, the swelling ratio can also be measured together.

Specifically, for the membrane doped with hydroxide ions by immersion in a 1M KOH aqueous solution for 24 hours, moisture on the surface of the membrane was wiped off as if lightly swept using KimWipe, and the length of the membrane in a wet state was accurately measured and recorded in units of mm (L_{wet}).

After the membrane for which the measurement was completed was washed 5 times with pure water, it was dried in an 80°C vacuum oven for 15 hours, and the length of the dry-state membrane was accurately measured and recorded up to mm units (L_{dry}). After comparing with the length measured immediately after completion of the doping, the swelling ratio was calculated according to Equation 4 below. $Swelling Ratio \left(%\right) = \left[\left({L}_{wet}-{L}_{dry}\right)\times 100\right] / {L}_{dry}$

The measurement results are shown in Table 3 below.

**[Table 3]**

| | Mw (kDa) | IEC (meq./g) | OH⁻ counter ion form | | |
|---|---|---|---|---|---|
| | | Exp.^{a)} (¹H-NMR) | σ (mS/cm) @80°C | WU (wt%) | Swelling ratio (%) |
| Example 1 | 71 | 2.37 | 102 | 80 | 14 |
| Example 2 | 73 | 1.95 | 80 | 51 | 11 |
| Example 3 | 94 | 2.50 | 112 | 78 | 13 |
| Example 4 | 134 | 2.44 | 125 | 82 | 13 |
| Example 5 | 221 | 2.41 | 118 | 72 | 13 |
| Example 6 | 150 | 1.84 | 80 | 50 | 8 |
| Example 7 | 353 | 2.39 | 110 | 79 | 13 |
| Example 8 | 470 | 2.41 | 123 | 74 | 13 |
| Comparative Example 1 | 172 | 1.72 | 87 | 70 | 13 |
| Comparative Example 2 | 250 | NA | NA | NA | NA |

In Table 3, NA means not measurable.

Also, a is a measured value measured through ¹H-NMR analysis.

The ion conductive compounds of Examples exhibited relatively excellent conductivity, WU, and swelling properties at various molecular weights and DFs compared to Comparative Examples.

Meanwhile, for the ion conductive compound of Comparative Example 2, measurement results could not be obtained because it was not completely dissolved in a solvent.

### Experimental Example 2

For the ion conductive compounds prepared in Examples 1, 7 and Comparative Examples 1, 2, solubility in N-methylpyrrolidone (NMP) and dimethyl sulfoxide (DMSO), which are solvents commonly used in preparation of polymer membranes, was evaluated.

Specifically, 0.5 g of the polymer of Example or Comparative Example was added to 10 ml of NMP and dissolved while stirring at a speed of 500 rpm for 24 hours under room temperature and atmospheric pressure conditions. The resulting reaction product was observed with a microscope, and solubility was evaluated according to the following criteria.

Solubility evaluation was performed for DMSO in the same manner as above. The results are shown in Table 4 below.

### <Evaluation criteria>

∘: All polymers were dissolved, and it was in a transparent and clear solution state
Δ: No polymer lumps were observed, but it was in a relatively opaque state compared to the solution state
X: The polymer was not dissolved at all and was in a swollen state

**[Table 4]**

| | Solubility for NMP | Solubility for DMSO |
|---|---|---|
| Example 1 | ○ | ○ |
| Example 7 | ○ | ○ |
| Comparative Example 1 | Δ | ○ |
| Comparative Example 2 | X | X |

From the experimental results described above, it can be seen that the ion conductive compounds of Examples are not only easier to prepare polymer membranes than Comparative Examples, but also more advantageous in improving the physical properties of the prepared polymer membranes.

## Claims

1. An ion conductive compound comprising a structure represented by Chemical Formula 1 below: 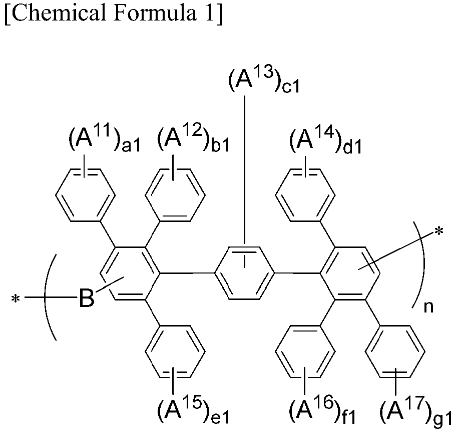 in Chemical Formula 1,
A¹¹ and A¹⁷ are each independently represented by Chemical Formula 2 below,
B is an arylene group having 6 to 18 carbon atoms,
a1 to g1 are each independently an integer of 0 or 1, provided that at least one of a1 to g1 is an integer of 1, and
n is an integer of 1 or more,
[Chemical Formula 2] *-L-Z · Y
in Chemical Formula 2,
L is a branched alkylene group having 3 to 30 carbon atoms,
Z is a quaternary ammonium-based cationic functional group, and
Y is an anion.

2. The ion conductive compound according to claim 1, wherein the ion conductive compound is a compound comprising any one among structures represented by Chemical Formulas 1a to 11 below: 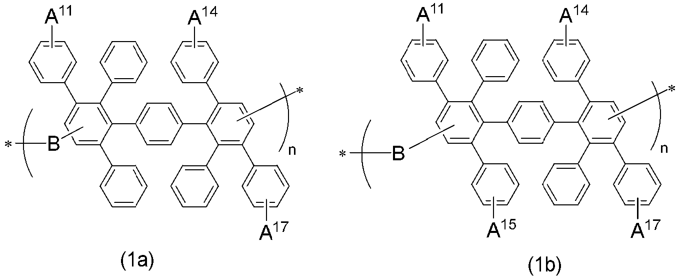 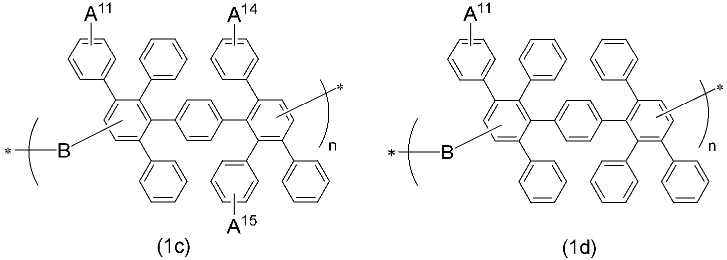 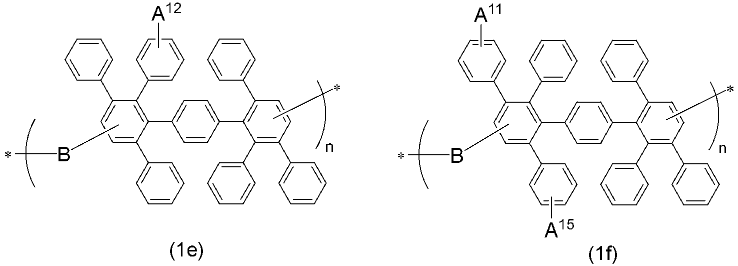 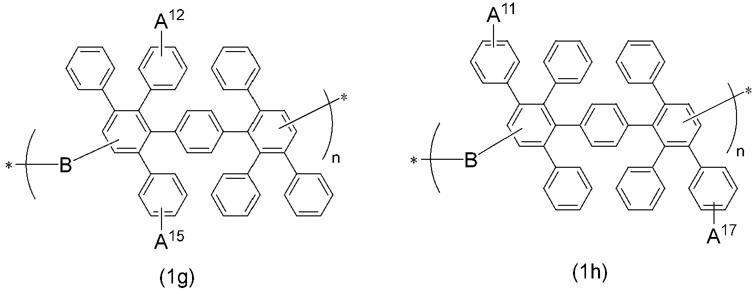 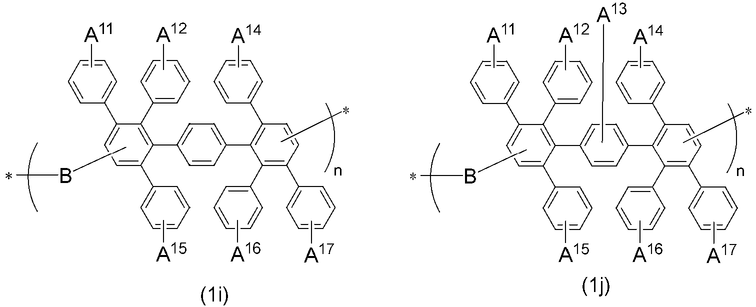 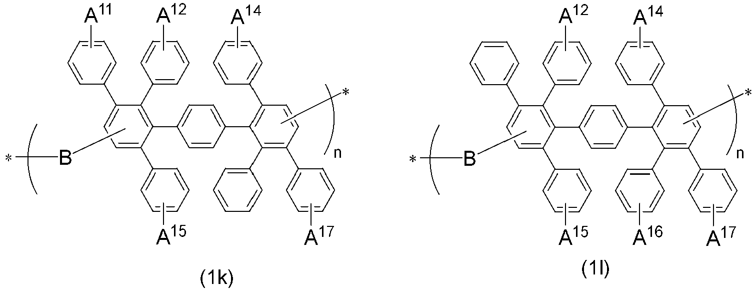 in Chemical Formulas 1a to 11, A¹¹ to A¹⁷, B and n are as defined in claim 1.

3. The ion conductive compound according to claim 1, wherein B is p-phenylene, m-phenylene, or biphenylene.

4. The ion conductive compound according to claim 1, wherein L is a branched alkylene group having 3 to 30 carbon atoms represented by Chemical Formula 3 below: 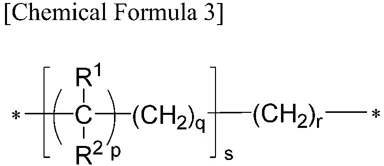 in Chemical Formula 3,
at least one of R¹ and R² is an alkyl group having 1 to 6 carbon atoms, and the remainder is hydrogen,
p is an integer of 1 to 3,
q and r are each independently an integer of 0 to 10, provided that q and r are not an integer of 0 at the same time, and
s is an integer of 1 to 3.

5. The ion conductive compound according to claim 1, wherein L is 1,1-dimethylhexylene, 1,1-diethylhexylene, 1,1-dimethylheptylene, or 1,1-dimethylpentylene.

6. The ion conductive compound according to claim 1, wherein Z is represented by Chemical Formula 4-1 or Chemical Formula 4-2 below: 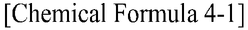 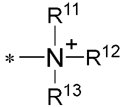 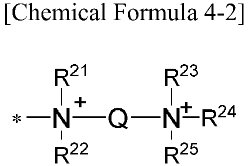 in Chemical Formulas 4-1 and 4-2,
Q is a substituted or unsubstituted alkylene group having 2 to 20 carbon atoms, and
R¹¹ to R¹³, and R²¹ to R²⁵ are each independently a substituted or unsubstituted alkyl group having 1 to 20 carbon atoms, a substituted or unsubstituted cycloalkyl group having 3 to 20 carbon atoms, a substituted or unsubstituted aryl group having 6 to 20 carbon atoms, a substituted or unsubstituted heterocyclic group having 2 to 20 carbon atoms comprising one or more heteroatoms selected from the group consisting of N, O and S, or two adjacent groups among R¹¹ to R¹³, R²¹ and R²², or two adjacent groups among R²³ to R²⁵ are connected to each other to form a substituted or unsubstituted N-containing heterocyclic group having 2 to 20 carbon atoms.

7. The ion conductive compound according to claim 1, wherein Z is trimethylammonium, triethylammonium, diethylmethylammonium, dimethylethylammonium, tripropylammonium, tributylammonium, N-methylpyrrolidinium, N-methylpiperidinium, or 6-(dimethylamino)-N,N,N-trimethylhexan-1-aminium; or is selected from the group consisting of the following: 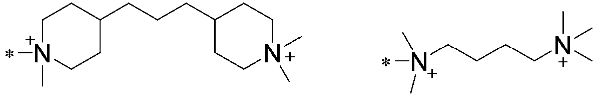 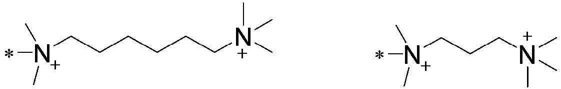 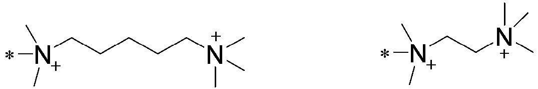 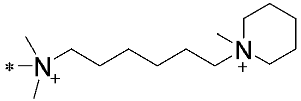 in the formulas, * is a bonding position with L in Chemical Formula 2.

8. The ion conductive compound according to claim 1, wherein Y is a chloride ion, a bromide ion, an iodide ion, a hydroxide ion, a bicarbonate ion, a dihydrogen phosphate ion, a hydrogen phosphate ion, or a phosphate ion.

9. The ion conductive compound according to claim 1, wherein the ion conductive compound comprises a structure represented by Chemical Formula 1a-1 or 1a-2 below: 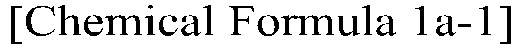 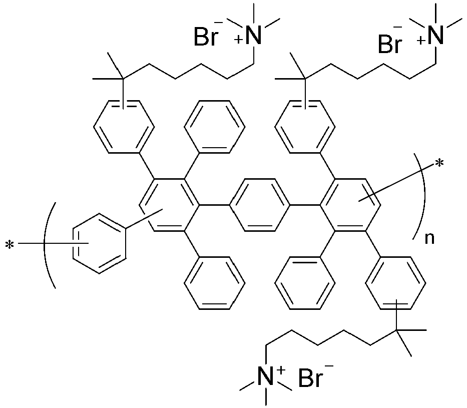 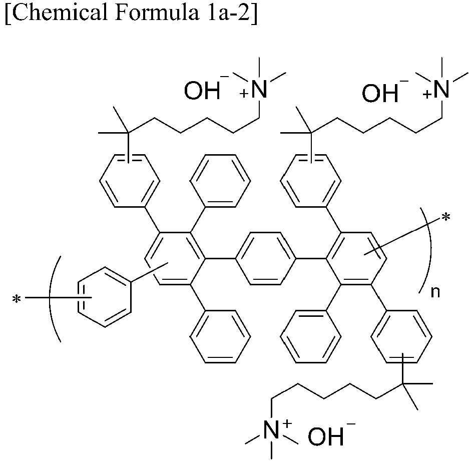 in Chemical Formulas 1a-1 and 1a-2, n is as defined in claim 1.

10. The ion conductive compound according to claim 1, wherein the ion conductive compound has a weight average molecular weight of 30 to 900 kDa.

11. The ion conductive compound according to claim 1, wherein the ion conductive compound has an ion exchange capacity of 1.0 meq./g or more.

12. A method for preparing an ion conductive compound according to claim 1, comprising:
a first step of preparing a compound comprising a structure represented by Chemical Formula 7 below by reacting a compound comprising a structure represented by Chemical Formula 5 below with one or more kinds among compounds represented by Chemical Formula 6 below in the presence of a strong acid; and
a second step of reacting the compound comprising a structure represented by Chemical Formula 7 with a raw material forming a quaternary ammonium-based cationic functional group: 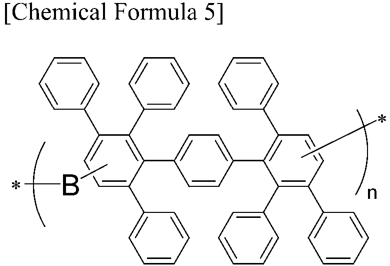
in Chemical Formula 5,
B is an arylene group having 6 to 18 carbon atoms, and
n is an integer of 1 or more,
[Chemical Formula 6] HO-L-X
in Chemical Formula 6,
L is a branched alkylene group having 3 to 30 carbon atoms, and
X is a halogen group, 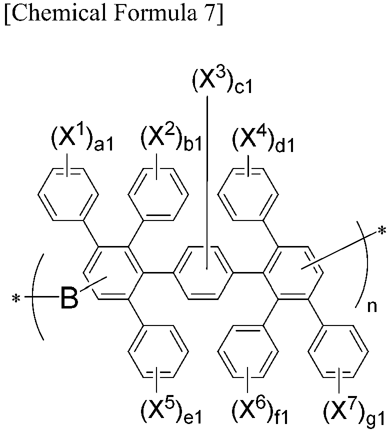
in Chemical Formula 7,
B and n are as defined in Chemical Formula 5,
X¹ to X⁷ are each independently represented by Chemical Formula 8 below, and
a1 to g1 are each independently an integer of 0 or 1, provided that at least one of a1 to g1 is an integer of 1,
[Chemical Formula 8] *-L-X
in Chemical Formula 8,
L and X are as defined in Chemical Formula 6.

13. The preparation method according to claim 12, wherein the first step is performed by dissolving the compound comprising a structure represented by Chemical Formula 5 and one or more kinds among the compounds represented by Chemical Formula 6 in a solvent under a nitrogen atmosphere, and then performing a substitution reaction by adding a strong acid.

14. The preparation method according to claim 12, wherein the compound represented by Chemical Formula 6 is 7-bromo-2-methyl-2-heptanol, 7-bromo-2-ethyl-2-heptanol, or 5-bromo-2-methyl-2-pentanol.

15. The preparation method according to claim 12, wherein the compound represented by Chemical Formula 6 is added in a molar ratio of 1 to 10 relative to 1 mole of the compound comprising a structure represented by Chemical Formula 5.

16. The preparation method according to claim 12, wherein the strong acid comprises trifluoromethane sulfonic acid, methanesulfonic acid, or a mixture thereof.

17. The preparation method according to claim 12, wherein the strong acid is added in a molar ratio of 2 to 20 based on 1 mole of the compound comprising a structure represented by Chemical Formula 5.

18. The preparation method according to claim 12, further comprising, before the first step, preparing a compound comprising a structure represented by Chemical Formula 6 by Diels-Alder reacting bistetracyclone with one or more among ethynyl substituted aromatic compounds.

19. The preparation method according to claim 12, wherein the ethynyl substituted aromatic compound is 1,4-diethynylbenzene, 4,4'-diethynylbiphenyl, or 1,3-diethynylbenzene.

20. The preparation method according to claim 12, wherein the second step is performed by dissolving the compound comprising a structure represented by Chemical Formula 7 in a polar aprotic solvent, and then performing a nucleophilic substitution reaction by adding a raw material forming a quaternary ammonium-based cationic functional group.

21. The preparation method according to claim 12, wherein the raw material forming a quaternary ammonium-based cationic functional group comprises a tertiary amine-based compound, a quaternary ammonium salt, or a mixture thereof.

22. The preparation method according to claim 21, wherein the tertiary amine-based compound is trimethylamine, triethylamine, tripropylamine, tributylamine, N-methylpyrrolidine, N-methylpiperidine, 4,4'-Trimethylenebis(1-methylpiperidine), N,N,N',N'-tetramethyl-1,6-hexanediamine, N,N,N',N'-tetramethyl-1,5-pentanediamine, N,N,N',N'-tetramethyl-1,4-butanediamine, N,N,N',N'-tetramethyl-1,3-propanediamine, or N,N,N',N'-tetramethyl-1,2-ethanediamine.

23. The preparation method according to claim 21, wherein the quaternary ammonium salt is a 6-(dimethylamino)-N,N,N-trimethylhexan-1-aminium salt.

24. The preparation method according to claim 12, wherein the raw material forming a quaternary ammonium-based cationic functional group is added in a molar ratio of 3 to 18 relative to 1 mole of the compound comprising a structure represented by Chemical Formula 7.

25. An ion exchange material comprising the ion conductive compound according to claim 1.

26. The ion exchange material according to claim 25, wherein the ion exchange material is an ion conductive single-layered membrane, an ion conductive reinforced membrane, an ion conductive composite membrane, an ion conductive reinforced composite membrane, an ion conductive cross-linked membrane, an electrolyte membrane, a separator, a water treatment membrane or an ionomer for a membrane-electrode assembly.

27. The ion exchange material according to claim 25, wherein the ion exchange material is for a water electrolysis system, a fuel cell, a redox flow battery, a carbon dioxide reduction system, an electrochemical ammonia production and decomposition system, an electrodialysis system, a reverse electrodialysis system, or a capacitive deionization system.

28. An ion conductive membrane comprising the ion conductive compound according to claim 1.

29. The ion conductive membrane according to claim 28, wherein the ion conductive membrane has an ion exchange capacity of 1.0 meq./g or more, as measured after doping in the form of a chloride counter ion by immersion in a 1M NaCl aqueous solution for 24 hours.

30. The ion conductive membrane according to claim 28, wherein the ion conductive membrane has an ion conductivity of 70 mS/cm or more, as measured at 60°C after doping in the form of a hydroxide counter-ion by immersion in a 1M KOH aqueous solution for 24 hours.

31. The ion conductive membrane according to claim 28, wherein the ion conductive membrane has a WU of 50 to 85 wt%, as calculated according to Equation 3 below after doping in the form of a hydroxide counter-ion by immersion in a 1M KOH aqueous solution for 24 hours and drying at 80°C for 15 hours: $WU \left(wt%\right) = \left({W}_{wet}-{W}_{dry}\right) \times 100 / {W}_{dry}$ in Equation 3,
W_{wet} is the weight of the ion conductive membrane measured after doping in the form of a hydroxide counter-ion by immersion in a 1M KOH aqueous solution for 24 hours, and
W_{dry} is the weight of the ion conductive membrane measured after drying the ion conductive membrane for which W_{wet} was measured in an 80°C vacuum oven for 15 hours.

32. The ion conductive membrane according to claim 28, wherein the ion conductive membrane has a swelling ratio of 8 to 15%, as calculated according to Equation 4 below after doping in the form of a hydroxide counter-ion by immersion in a 1M KOH aqueous solution for 24 hours and drying at 80°C for 15 hours: $Swelling ratio \left(%\right) = \left({L}_{wet}-{L}_{dry}\right) \times 100 / {L}_{dry}$ in Equation 4,
L_{wet} is the length of the ion conductive membrane measured after doping in the form of a hydroxide counter-ion by immersion in a 1M KOH aqueous solution for 24 hours, and
L_{dry} is the length of the ion conductive membrane measured at room temperature after drying the ion conductive membrane for which L_{wet} was measured in a vacuum oven at 60°C to 80°C for 15 hours.
